(19) **Europäisches Patentamt**

**European Patent Office**

**Office européen des brevets**

(11) **EP 1 128 194 B1**

(12) **EUROPEAN PATENT SPECIFICATION**

(45) Date of publication and mention
of the grant of the patent:
**06.09.2006 Bulletin 2006/36**

(51) Int Cl.:
*G02B 6/02* *(2006.01)*   *G02B 6/032* *(2006.01)*

(21) Application number: **01101297.8**

(22) Date of filing: **19.01.2001**

(54) **Photonic crystal fiber**

Photonenkristallglasfaser

Fibre à cristal photonique

(84) Designated Contracting States:
**DE DK FR GB IT**

(30) Priority: **21.01.2000 JP 2000013185**

(43) Date of publication of application:
**29.08.2001 Bulletin 2001/35**

(73) Proprietor: **Sumitomo Electric Industries, Ltd.
Osaka-shi,
Osaka 541-0041 (JP)**

(72) Inventors:
• **Hasegawa, Takemi,
Yokohama Works of Sumitomo
Yokohama-shi,
Kanagawa 244-8588 (JP)**
• **Sasaoka, Eisuke,
Yokohama Works of Sumitomo
Yokohama-shi,
Kanagawa 244-8588 (JP)**
• **Nishimura, Masayuki,
Yokohama Works of Sumitomo
Yokohama-shi,
Kanagawa 244-8588 (JP)**

(74) Representative: **Grünecker, Kinkeldey,
Stockmair & Schwanhäusser
Anwaltssozietät
Maximilianstrasse 58
80538 München (DE)**

(56) References cited:
**EP-A- 0 810 453**

• **BARKOU S E ET AL: "SILICA-AIR PHOTONIC CRYSTAL FIBER DESIGN THAT PERMITS WAVEGUIDING BY A TRUE PHOTONIC BANDGAP EFFECT" OPTICS LETTERS, OPTICAL SOCIETY OF AMERICA, WASHINGTON, US, vol. 24, no. 1, 1999, pages 46-48, XP000801368 ISSN: 0146-9592**
• **MONRO T M ET AL: "DEVELOPING HOLEY FIBRES FOR EVANESCENT FIELD DEVICED" ELECTRONICS LETTERS, IEE STEVENAGE, GB, vol. 35, no. 14, 8 July 1999 (1999-07-08), pages 1188-1189, XP000939538 ISSN: 0013-5194**
• **CREGAN R F ET AL: "SINGLE-MODE PHOTONIC BAND GAP GUIDANCE OF LIGHT IN AIR" SCIENCE, AMERICAN ASSOCIATION FOR THE ADVANCEMENT OF SCIENCE,, US, vol. 285, no. 5433, 1999, pages 1537-1539, XP000914812 ISSN: 0036-8075**

**Description**

BACKGROUND OF THE INVENTION

Field of the Invention

The present invention relates to an optical fiber which can be suitably used as an optical transmission path and a dispersion compensator.

Related Background Art

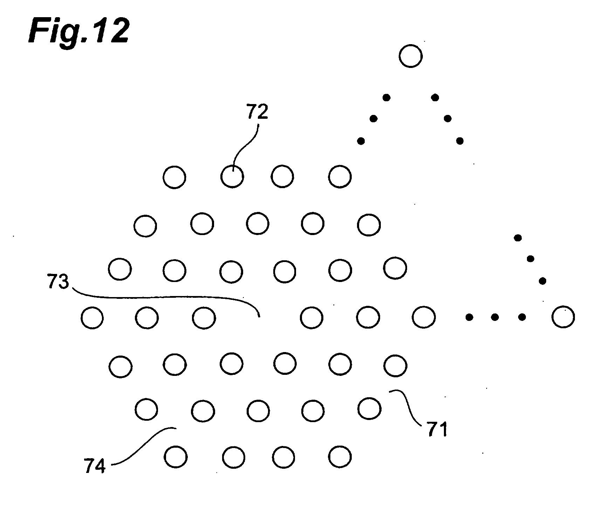

Fig. 12 is a cross-sectional view of an optical fiber having so-called microstructures which has been known conventionally. As shown in Fig. 12, this optical fiber has a cross-sectional structure having a large number of voids 72 in a silica glass 71. A central portion in cross section having no voids 72 constitutes a core region 73 and a portion surrounding the core region 73 which has a large number of the voids 72 constitutes a cladding region 74.

The principle of light confinement of the optical fiber having such a microstructure is explained qualitatively using a concept called effective refractive indices (for example, T. A. Birks et al. Optics Letters Vol. 22 p.961 (1997)). Due to the existence of the microstructure, in a strict sense, the refractive indices in the core region 73 and the cladding region 74 should have a complicate distribution. However, on the assumption that the optical guide characteristics can be approximated by replacing respective regions with uniform mediums, the refractive indices of these uniform mediums are called the effective refractive indices. The effective refractive indices $n_{eff}$ satisfy a following equation.

$$\left(\frac{f_1}{n_1{}^2}+\frac{f_2}{n_2{}^2}\right)^{-1} \le n_{eff}{}^2 \le f_1 n_1{}^2 + f_2 n_2{}^2 \qquad \cdots (1)$$

where n is the refractive index and f is the volume fraction. Further, a suffix 1 indicates silica glass and a suffix 2 indicates air. With respect to the volume fraction, $f_1 + f_2 = 1$ holds. Usually, since $n_1 > n_2$, the both side members of the equation (1) become smaller corresponding to the increase of $f_2$. Accordingly, the effective refractive index of the cladding region 74 having a large number of voids 72 becomes smaller than the effective refractive index of the core region 73 so that the light confinement is realized in the same manner as the usual optical fiber.

Such a model of the effective refractive indices is considered to be reasonable in a case that the optical wavelength is large compared to the scale of the microstructure. However, as the optical wavelength becomes shorter, the light is locally concentrated at portions having the high refractive index and hence, although the effective refractive indices are elevated, simultaneously, it is considered that the assumption that the structure having refractive index distribution can be replaced by the uniform mediums will lose the validity.

On the other hand, an optical fiber having a greater negative dispersion than such an optical fiber is disclosed in USP 5,802,236, for example. Although this optical fiber has a similar microstructure, the optical fiber is characterized in that a cladding region is constituted by an inner cladding region and an outer cladding region and the effective refractive index of the inner cladding region is smaller than the outer cladding region.

SUMMARY OF THE INVENTION

However, although the optical fiber disclosed in the above-mentioned publication increases the negative dispersion compared to the optical fiber having the uniform cladding structure, the optical fiber suffers from a drawback that the effective core area is decreased.

The invention has been made in view of the above and it is an object to provide an optical fiber which can make the negative dispersion thereof greater than an optical fiber having a uniform cladding structure so as to increase the effective core area.

The present invention achieves its object by providing an optical fiber comprising the features set out in claim 1.

An optical fiber according to the present invention has a core region and a cladding region, surrounding the core region, comprising a main medium and sub mediums having different optical characteristics from the main medium and spaced apart in the main medium. The core and cladding regions are extending along a fiber axis. The core region comprises of a central core region having a hollow portion disposed at the center of the core region and extending along the fiber axis, and an outer core region surrounding the central core region having a mean refractive index higher than the central core region and extending along the fiber axis. And the core region has a higher mean refractive index than the cladding region. The mean refractive index is defined by a root mean square refractive index weighted by volume of medium.

According to this configuration, the optical fiber according to the present invention has more negative waveguide dispersion than the optical fiber having a uniform cladding structure. Further, the effective core area can be increased. Accordingly, the optical fiber can attain the larger negative waveguide dispersion and at the same time can ensure the larger effective core area compared to the conventional optical fiber.

In this optical fiber, the main medium constituting the core and cladding region may be silica glass and the sub mediums are spaced apart in the main medium so that the ratio of the optical power propagating in the hollow portion to the total power may be 1 % or higher, and more preferably 10 % or higher.

Such an optical fiber is suitable for realizing an optical transmission path of low nonlinearity and low transmission loss. In the prior art, almost all the optical power propagating in the optical fiber propagates in the inside of the main medium and hence, the nonlinearity and the transmission loss of the optical fiber become substantially equal to those of the main medium. However, by increasing the ratio of optical power propagating in the hollow portion, the nonlinearity and the transmission loss of the optical fiber take intermediate values between those of the hollow portion and the main medium. Then, by filling an inactive gas or a dry air having low nonlinearity and low transmission loss into the hollow or by keeping the hollow portion under vacuum, an optical transmission path of low nonlinearity and low transmission loss can be realized. Silica glass may be doped with Ge, F, B, P, Ti or the like so as to change the transmission characteristics of the optical fiber.

It is preferable that at least one end of the hollow portion is closed and it is more preferable to dispose hollow portions having both ends closed periodically along the fiber axis.

Due to such configuration, the occurrence of the transmission loss derived from the intrusion of contaminants into the hollow which opens at the fiber end can be prevented. Further, with the presence of portions where the hollow portions are closed, it becomes easy to cut the fiber at these portions and to realize the optical coupling between the fiber and other optical part.

The inside of the hollow may be kept under vacuum or may be preferably filled with a gas having optical gain characteristics such as $H_2$ and $NH_3$. By keeping the hollow portion under vacuum, the low nonlinearity and the low transmission loss can be realized. Further, by filling the gas having the optical gain characteristics into the hollow, an optical amplifying fiber can be realized. In such an optical fiber, since the ratio of the optical power propagating in the main medium is low, the nonlinear optical effect hardly occurs even when the optical power is increased to the high power.

BRIEF EXPLANATION OF THE DRAWINGS

Fig. 1 is a view showing the division of regions on a cross section of an optical fiber according to the invention.

Fig. 2 is a transverse cross-sectional view showing the structure of the optical fiber.

Fig. 3 is a view for explaining the definition of the mean refractive indices of the invention.

Fig. 4 is a view showing the cross-sectional structure of an optical fiber of an example 2.

Fig. 5 and Fig. 6 are respectively diagrams showing the distribution of the mean refractive indices in examples 1 and 3.

Fig. 7 is a view showing the calculated result of the waveguide dispersion and the effective core area of the examples 1 to 3 together with those of a comparison example.

Fig. 8 is a transverse cross-sectional view showing the structure of an optical fiber of other embodiment of the invention.

Fig. 9 is a graph in which the ratio of the optical power which propagates in a hollow portion and the effective core area to the pitch are plotted.

Fig. 10 is a longitudinal cross-sectional view showing the structure of an optical fiber of another embodiment of the invention.

Fig. 11 is a cross-sectional view of Fig. 10 taken along a line XI - XI.

Fig. 12 is a cross-sectional view of an optical fiber including a microstructure which has been known conventionally.

DESCRIPTION OF THE PREFERRED EMBODIMENTS

Embodiments of the invention are explained in conjunction with attached drawings hereinafter. To facilitate the comprehension of the explanation, the same reference numerals denote the same parts, where possible, throughout the drawings, and a repeated explanation will be omitted. Further, the size ratio of respective drawings does not necessarily agree with the size ratio of the explanation of the Mode for carrying out the Invention.

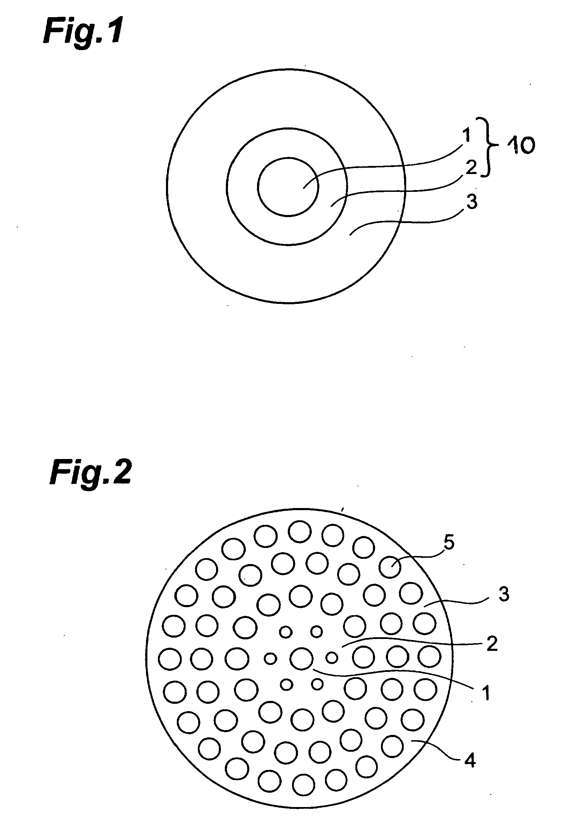

Fig. 1 is a view showing the division into regions on a cross section of an optical fiber of one embodiment of the invention. Fig. 2 is a cross-sectional view for explaining a microstructure of the optical fiber of the embodiment. As shown in Fig. 1, in this embodiment, the cross section is constituted by a first core region 1, a second core region 2 which surrounds the first core region 1, and a cladding region 3 which surrounds the second core region 2. The region includes the first core region 1 and the second core region 2 is hereinafter called a core region 10. Further, as shown in Fig. 2, these respective regions are comprised of silica glass 4 which constitutes a main medium and a large number of voids 5 which constitute sub mediums.

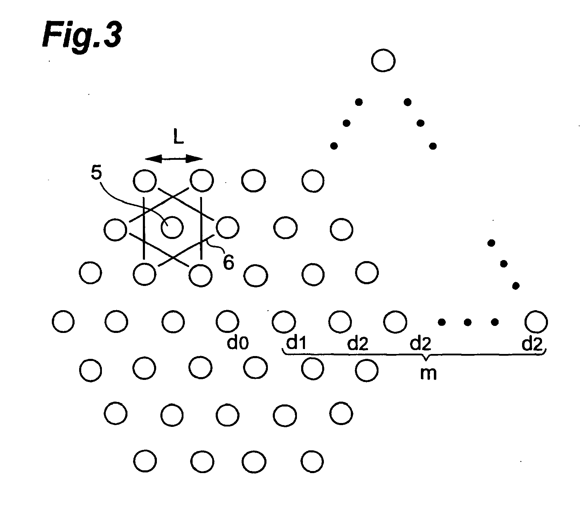

In this embodiment, to classify the refractive indices of respective regions, a concept called the mean refractive indices is used. Since the effective refractive indices are defined using the approximation, the definition is ambiguous and hence is not suitable for the description of the structure. Accordingly, this embodiment does not employ the effective refractive indices. Fig. 3 is a view for explaining the manner of determining the mean refractive indices of the optical fiber of this embodiment. With respect to one void 5x focused in a certain region, perpendicular bisectors are drawn between this void 5x and other surrounding voids 5. Then, a polygon which is partitioned by these perpendicular bisectors and includes only the void 5x is defined. This polygon is called a cell 6. In this cell 6, the mean refractive index $n_{avg}$ can be calculated by a following equation.

$$n_{avg} = \sqrt{\frac{n_g^2\left(A_{hole} - A_{hole}\right) + n_h^2 A_{hole}}{A_{cell}}} \qquad \cdots(2)$$

where, $n_g$ is the refractive index of a fiber material portion, nh is the refractive index of the void 5x portion, $A_{cell}$ is a whole area of the cell 6, and $A_{hole}$ is an area of the void 5x. The mean refractive index $n_{avg}$ of a given region can be expressed by a following equation. In the equation, the cell numbers of the cells 6 included in the region is set as j-k, a mean refractive index and the cell area of the i-th cell 6 are respectively set as $n_{avgi}$ and $A_{cell,i}$.

$$N_{avg} = \sqrt{\frac{\sum_{i=j}^{k} n_{avg,i}^2 A_{cell,i}}{\sum_{i=j}^{k} A_{cell,i}}} \qquad \cdots(3)$$

This embodiment is characterized by setting the mean refractive index of the core region 10 higher than the refractive index of the cladding region 3. The mean refractive indices $N_{avg}$ of respective regions can be set by adjusting the magnitude of the voids 5. That is, by increasing or decreasing the cross-sectional area of voids 5 per a unit cross-sectional area, the ratio between the silica glass 4 which constitutes the main medium and the voids 5 which constitute the sub mediums can be increased or decreased and hence, the mean refractive index $N_{avg}$ of the region can be set to an arbitrary value.

Inventors have prepared three kinds of optical fibers which differ in the diameter of the voids 5 and the pitch (called "examples 1 to 3") and have carried out a comparison of characteristics between these optical fibers and an optical fiber having a conventional-type uniform cladding structure (called "comparison example"). The result of the comparison is reported hereinafter.

In any one of the optical fibers of the examples 1 to 3 and the comparison example, the pitch L of the voids 5 is constant and the number of layers m is 7. The cell region which adopts the void 5 disposed at the fiber center of the optical fiber as the center thereof corresponds to the first core region 1, the six cells 6 which surround the first core region correspond to the second core region 2, and 162 cells 6 disposed outside the second core region correspond to the cladding region 3.

The respective pitches L and the distribution of the ratio d/L in respective regions between the diameter of voids 5 and the pitch L in the examples 1 to 3 and the comparison example are shown in Table 1.

Table 1. distribution of diameter of voids

|  | Pitch L | 1st core region | 2nd core region | cladding region |
|---|---|---|---|---|
| example 1 | 1.22 $\mu$m | 0.3 | 0.2 | 0.4 |

(continued)

|  | Pitch L | 1st core region | 2nd core region | cladding region |
|---|---|---|---|---|
| example2 | 1.23 μm | 0.4 | 0.2 | 0.4 |
| example3 | 1.25 μm | 0.5 | 0.2 | 0.4 |
| comparison example | 1.20 μm | 0.2 | 0.2 | 0.4 |

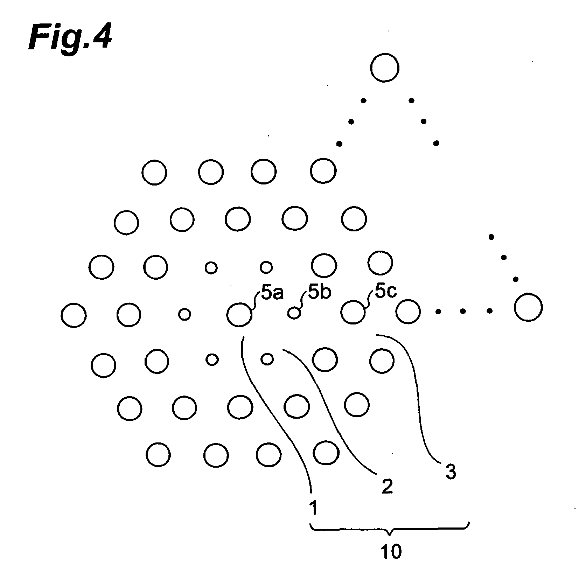

As can be understood from Table 1, the respective examples 1 to 3 and the comparison example differ only in the diameter of the void 5 present at the center of the optical fiber. Fig. 4 shows the cross-sectional structure of the example 2. The voids 5a, 5b or 5c are arranged on each hexagonal lattice, wherein the voids 5b in the second core region 2 has smaller diameter compared to the voids in other regions. Due to such a constitution, it becomes possible to make the mean refractive index of the second core region 2 larger than the mean refractive index of the cladding region 3 and simultaneously to make the mean refractive index of the first core region 1 smaller than the mean refractive index of the second core region 2.

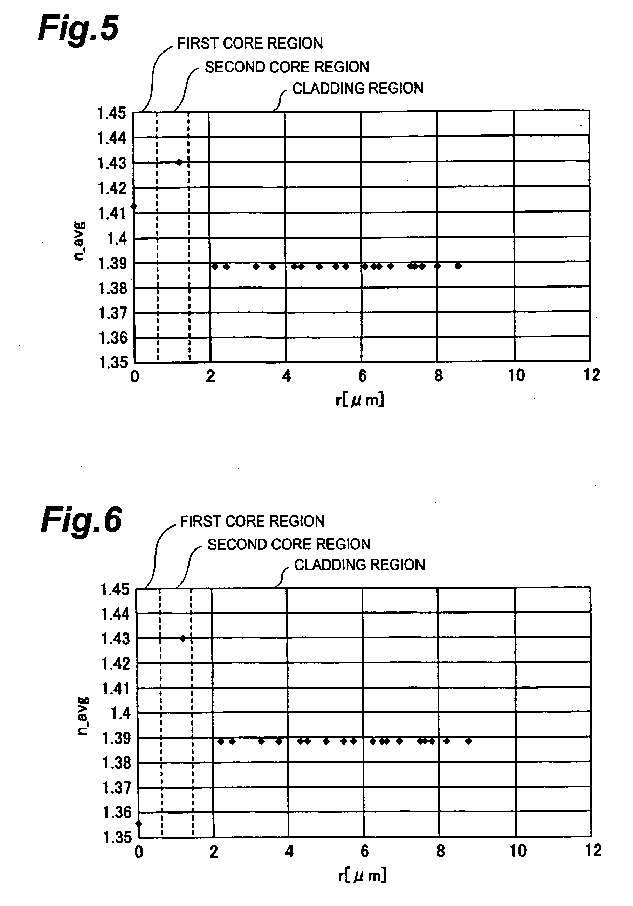

Fig. 5 and Fig. 6 express the mean refractive indices $n_{avg}$ of respective cells as diagrams where the center P of each void 5 is set as the position of the cell 6 and the distance from an origin O (fiber axis) to P is set as r with respect to respective examples 1 and 3 . Here, the calculation was performed by setting the refractive index of the silica glass 4 which constitutes the material as 1.444 and the refractive index of air as 1.

In both examples, in the second core region 2, since the diameter of the voids 5 is small, the mean refractive index becomes high, while in the first core region 1, since the diameter of the voids 5 is large, the mean refractive index becomes low. The mean refractive index of the whole core region 10 is made higher than the mean refractive index of the cladding region 3 in all examples.

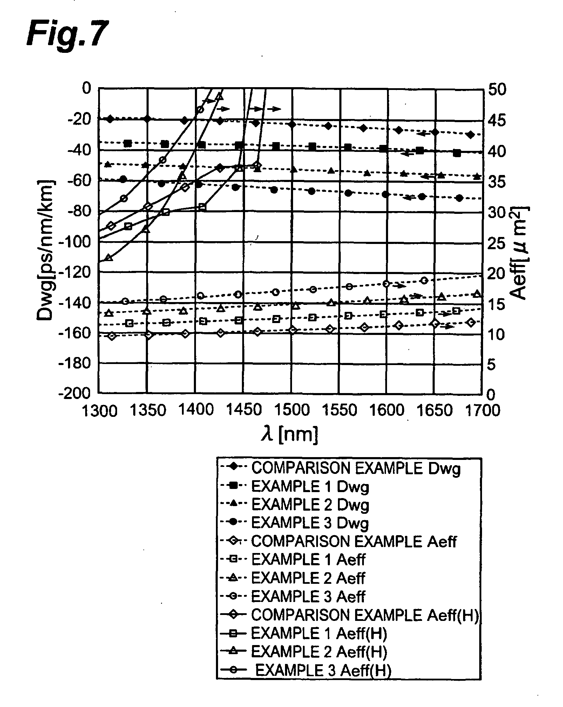

Fig. 7 shows the result of a comparison between respective examples 1 to 3 and the comparison example with respect to the waveguide dispersion $D_{wg}$ and the effective core area $A_{eff}$. In the drawing, the waveguide dispersion $D_{wg}$ is taken on the axis of the left-side ordinates, the effective core area $A_{eff}$ is taken on the axis of the right-side ordinates and the optical wavelength $\lambda$ is taken on the axis of abscissa. Broken lines show the characteristics of fundamental mode and solid lines show the characteristics of higher order mode. All of examples 1 to 3 and the comparison example have the cut-off of high-order mode in the vicinity of 1.5 μm. With respect to the waveguide dispersion $D_{wg}$, it is made gradually larger in order of the comparison example, the example 1, the example 2 and the example 3. With respect to the effective core area $A_{eff}$, it is also made gradually larger in order of the comparison example, the example 1, the example 2 and the example 3. In this manner, it has been confirmed that, according to this embodiment, it becomes possible to obtain the large effective core area $A_{eff}$ as well as the large negative waveguide dispersion.

In this manner, since the optical fiber has the large effective core area, the occurrence of the nonlinear optical phenomena can be suppressed so that the transmission quality can be enhanced. Further, since the optical fiber has the large negative waveguide dispersion, the fiber length necessary for compensating for the positive waveguide dispersion can be made short.

In the above-mentioned embodiment, although the explanation has been made with respect to the case that the voids are formed in the core region and the cladding region and air is filled in the insides of the voids, with respect to regions other than the first core region 1, the microstructure region may be formed with a medium which differs in the refractive index from the material of the optical fiber which constitutes the main medium in place of the voids. Further, with respect to the void 5a of the first core region 1, the inside thereof may be formed in a vacuum state or may be filled with a material having optical gain characteristics such as $H_2$ and $NH_3$.

By making the inside of the void 5a in a vacuum state, the low transmission loss and the low non-linearity can be realized. Further, by filling the material having optical gain characteristics into the void 5a, an optical amplifying fiber which can suppress the nonlinear optical effect in the silica glass can be realized.

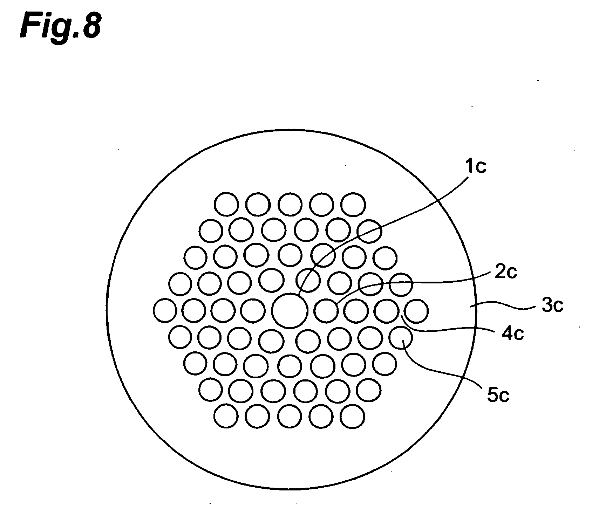

Here, the optical power which propagates through the voids 5 is preferably set to not less than 1 % of the optical power which propagates through the optical fiber and is more preferably set to not less than 10 % . To increase the optical power which transmits through the cavities, the structure shown in Fig. 8 is suitable.

In an embodiment shown in Fig. 8, a first core region 1c, a second core region 2c and a cladding region 3c are respectively constituted by forming voids 5c which constitute a sub medium in silica glass 4c which constitutes a main medium, wherein the ratio d/L being the diameter of void/pitch of respective regions is set to 0.86, 0.77 and 0.80.

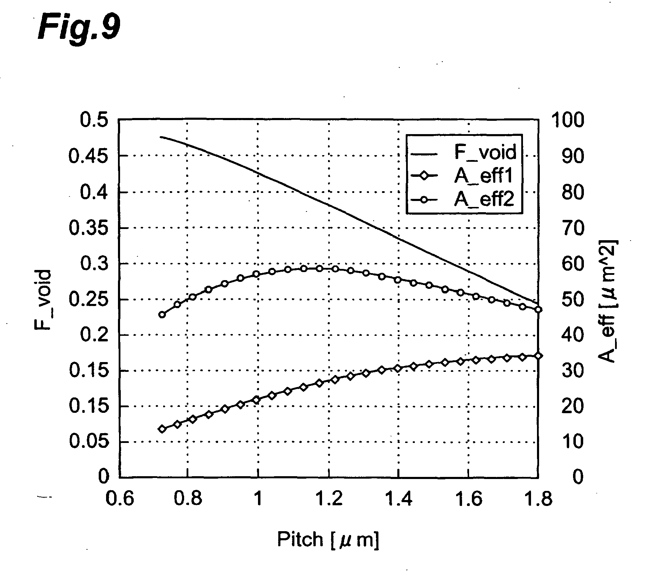

Fig. 9 shows the ratio $F_{void}$ of an optical power which propagates through hollow portions at the wavelength of 1550 nm and the effective core area $A_{eff}$ when the pitch L is changed in the range of 0.8 μm to 1.8 μm are shown. Here, as the effective core area, two different values $A_{eff1}$, $A_{eff2}$ are shown in the graph. Out of these values, the value $A_{eff1}$ is a value obtained by a usual definition which is expressed by a following equation.

$$A_{eff1} = \frac{\left\{ \iint_\Omega |E|^2 dA \right\}^2}{\int_\Omega |E|^4 dA} \qquad \cdots (4)$$

Here, **E** indicates a electromagnetic field and $\Omega$ indicates a whole cross section of the fiber. The effective core area defined by the equation (4) is useful as an index of the nonlinearity in the usual optical fiber. On the other hand, in the optical fiber of the present invention which contains the sub medium which can ignore the nonlinearity, the effective core area $A_{eff2}$ expressed by a following equation should be rather used as the index.

$$A_{eff2} = \frac{\left\{ \iint_\Omega |E|^2 dA \right\}^2}{\int_{\Omega_1} |E|^4 dA} \qquad \cdots (5)$$

Here, $\Omega_1$ indicates the region of themainmedium (region excluding the region of sub medium which can ignore the nonlinearity).

As can be understood from Fig. 9, in such an optical fiber, the ratio $F_{void}$ of the optical power which propagates through the sub medium region is high such that the ratio $F_{void}$ is not less than 25 %. Further, in Fig. 9, $A_{eff2}$ is higher than $A_{eff1}$. This implies that by making a part of the optical power propagate through the sub medium having nonlinearity, the nonlinearity of the fiber can be reduced.

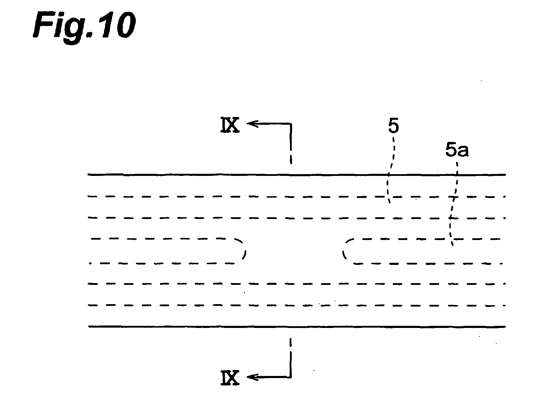

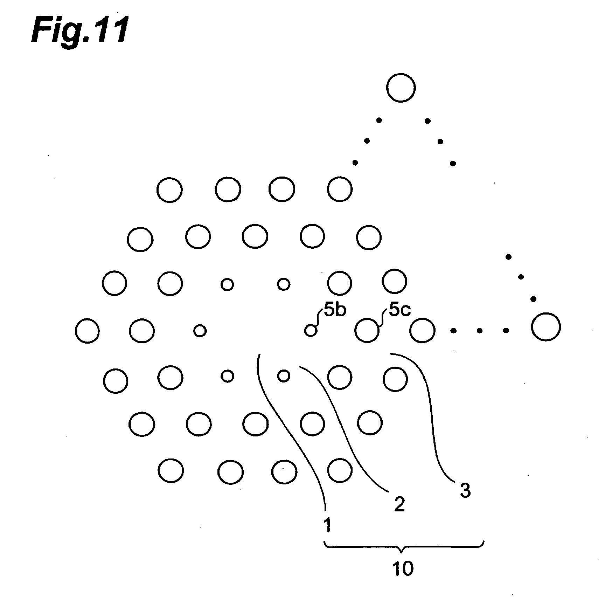

It is unnecessary for the optical fiber of the present invention to have a cross-sectional structure which is uniform in an axial direction. For example, as indicated by a longitudinal cross-sectional structure shown in Fig. 10, portions where the hollow portions are closed (portions whose transverse cross-section are shown in Fig. 11) may be formed at one position or several positions in the axial direction. Further, when the closed portions are formed at plural positions, it is preferable to periodically arrange the closing portions in the axial direction.

As a result, the intrusion of contaminants such as vapor and the like into the cavities having fiber ends thereof opened can be prevented. Accordingly, the occurrence of the transmission loss increase accompanying the optical coupling of the optical fiber with other optical part can be prevented. Further, with the provision of periodic presence of these closed portions in the axial direction of the fiber, when it becomes necessary to perform the connection, the fiber may be cut at these portions and then may be connected so as to facilitate the connection of low loss.

Here, although only the embodiment where only the core hollow portion 5a is periodically closed, a structure where other voids 5 may be closed at the same period may be adopted.

## Claims

1. An optical fiber having a core region (10) and a cladding region (3), surrounding said core region, comprising a main medium (4) and sub mediums (5) having different optical characteristics from said main medium and spaced apart in said main medium, and said core region (10) and cladding region (3) are extending along a fiber axis, **characterized in that**
said core region (10) comprises of:

   a central core region (1) having a hollow portion (5a) disposed at the center of said core region and extending along the fiber axis; and
   an outer core region (2) surrounding said central core region having a mean refractive index, defined by a root mean square refractive index weighted by volume of medium, higher than said central core region and extending along the fiber axis, and
   said core region (10) has a higher mean refractive index than said cladding region (3).

2. An optical fiber according to claim 1, wherein the main medium constituting said core and cladding region (10, 3) is silica glass and said sub mediums (5) are spaced apart in said main medium (4) so that the ratio of the optical power propagating in said hollow portion to the total power is 1 % or higher.

3. An optical fiber according to claim 2, wherein said sub mediums (5) are spaced apart in said main medium (4) so that the ratio of the optical power propagating in said hollow portion to the total power is 10 % or higher.

4. An optical fiber according to claim 1, wherein at least one end of said hollow portion (5a) is closed.

5. An optical fiber according to claim 4, wherein a plurality of said hollow portions (5a) having both ends closed are periodically disposed along the fiber axis.

6. An optical fiber according to claim 1, wherein the inside of said hollow portion (5a) is vacuum

7. An optical fiber according to claim 1, wherein a gas having an optical gain characteristics is filled in the inside of said hollow portion (5a).

**Patentansprüche**

1. Eine optische Faser mit einer Kern-Region (10) und einer ummantelnden Region (3), umgebend besagte Kern-Region, umfassend ein hauptsächliches Medium (4) und Sub-Medien (5) mit unterschiedlichen optischen Eigenschaften im Vergleich zu besagtem hauptsächlichen Medium und räumlich voneinander entfernt in besagtem hauptsächlichem Medium, wobei sich besagte Kern-Region (10) und besagte ummantelnde Region (3) entlang einer Faserachse erstrekken, charakterisiert **dadurch**, dass
besagte Kern-Region (10) Folgendes umfasst:

eine zentrale Kern-Region (1) mit einem hohlen Abschnitt (5a), verteilt im Zentrum besagter Kern-Region und sich erstreckend entlang der Faser-Achse; und
eine äußere Kern-Region (2) umgebend besagte zentrale Kern-Region mit einem mittleren refraktiven Index, definiert durch eine Wurzel eines quadratisch gemittelten refraktiven Index, gewichtet durch das Volumen des Mediums, höher als besagte zentrale Kern-Region und sich erstreckend, entlang der Faserachse, wobei besagte Kern-Region (10) einen höheren mittleren refraktiven Index aufweist als besagte ummantelnde Regionen (3).

2. Eine optische Faser gemäß Anspruch 1, wobei das hauptsächliche Medium, welches besagte Kern- und ummantelnde Regionen (10, 3) konstituiert, Silizium-Glas ist, und besagte Sub-Medien (5) räumlich voneinander entfernt in besagtem hauptsächlichen Medium (4) liegen, so dass das Verhältnis der optischen Leistung, welche sich in dem hohlen Abschnitt ausbreitet zur gesamten Leistung 1 % oder höher ist.

3. Eine optische Faser gemäß Anspruch 2, wobei besagte Sub-Medien (5) räumlich voneinander entfernt in besagtem hauptsächlichen Medium (4) sind, so dass der Anteil der optischen Leistung, welche sich in besagtem hohlen Abschnitt ausbreitet zur gesamten Leistung 10% oder höher ist.

4. Eine optische Faser gemäß Anspruch 1, wobei zumindest ein Ende von besagtem hohlen Abschnitt (5a) geschlossen ist.

5. Eine optische Faser gemäß Anspruch 4, wobei eine Vielzahl von besagten hohlen Abschnitten (5a), welche beide Enden als geschlossen aufweisen, periodisch entlang der Faser-Achse angeordnet sind.

6. Eine optische Faser gemäß Anspruch 1, wobei das Innere des hohlen Abschnitts (5a) Vakuum ist.

7. Eine optische Faser gemäß Anspruch 1, wobei ein Gas mit einer optisch vorteilhaften Charakteristik in das Innere von besagtem hohlen Abschnitt (5a) eingefüllt ist.

**Revendications**

1. Fibre optique comprenant une région de coeur (10) et une région de gaine (3), entourant ladite région de coeur, comprenant un milieu principal (4) et des milieux secondaires (5) dotés de caractéristiques optiques différentes de celles dudit milieu principal et espacés les uns des autres dans ledit milieu principal, et ladite région de coeur (10) et ladite région de gaine (3) s'étendant le long d'un axe de fibre, **caractérisée en ce que**

ladite région de coeur (10) comprend :

une région de coeur centrale (1) comportant une portion creuse (5a) disposée au centre de ladite région de coeur et s'étendant le long de l'axe de la fibre ; et

une région de coeur extérieure (2) entourant ladite région de coeur centrale ayant un indice de réfraction moyen, défini par une valeur efficace d'indice de réfraction pondéré par le volume du milieu, plus élevé que celui de ladite région de coeur centrale et s'étendant le long de l'axe de la fibre, et

ladite région de coeur (10) a un indice de réfraction moyen plus élevé que celui de ladite région de gaine (3).

2. Fibre optique selon la revendication 1, dans laquelle le milieu principal constituant ledit coeur et ladite région de gaine (10, 3) est du verre de silice et lesdits milieux secondaires (5) sont espacés les uns des autres dans ledit milieu principal (4) de telle sorte que le rapport entre la puissance optique qui se propage dans ladite portion creuse et la puissance totale est égal à 1 % ou plus.

3. Fibre optique selon la revendication 2, dans laquelle lesdits milieux secondaires (5) sont espacés les uns des autres dans ledit milieu principal (4) de telle sorte que le rapport entre la puissance optique qui se propage dans ladite portion creuse et la puissance totale est égal à 10 % ou plus.

4. Fibre optique selon la revendication 1, dans laquelle au moins une extrémité de ladite portion creuse (5a) est fermée.

5. Fibre optique selon la revendication 4, dans laquelle une pluralité desdites portions creuses (5a) ayant les deux extrémités fermées sont disposées périodiquement le long de l'axe de la fibre.

6. Fibre optique selon la revendication 1, dans laquelle l'intérieur de ladite portion creuse (5a) est le vide.

7. Fibre optique selon la revendication 1, dans laquelle un gaz ayant une caractéristique de gain optique remplit l'intérieur de ladite portion creuse (5a).

## Fig.1

## Fig.2

# Fig.3

## Fig.4

## Fig.5

FIRST CORE REGION

SECOND CORE REGION

CLADDING REGION

## Fig.6

FIRST CORE REGION

SECOND CORE REGION

CLADDING REGION

## Fig.7

# Fig.8

1c

2c

3c

4c

5c

# *Fig.9*

# Fig.10

# Fig.11

**Fig.12**